# FASCICULE DE BREVET EUROPEEN

(11) **EP 3 314 187 B1**
(45) Date de publication et mention de la délivrance du brevet: **31.07.2019**
(21) Numéro de dépôt: 16733907.6
(22) Date de dépôt: 22.06.2016
(51) Int. Cl.: F28D 20/02, F28D 20/00

(54) **BATTERIE THERMIQUE À MATÉRIAU À CHANGEMENT DE PHASE ENCAPSULÉ ET PROCÉDÉ DE FABRICATION ASSOCIÉ**
WÄRMEBATTERIE MIT VERKAPSELTEM PHASENÜBERGANGSMATERIAL UND ZUGEHÖRIGES HERSTELLUNGSVERFAHREN
THERMAL ACCUMULATOR WITH AN ENCAPSULATED PHASE CHANGE MATERIAL, AND ASSOCIATED MANUFACTURING PROCESS

(30) Priorité: 26.06.2015 FR 1555996
(43) Date de publication de la demande: 02.05.2018
(73) Titulaire: Valeo Systemes Thermiques, 78320 Le Mesnil-Saint-Denis Cedex (FR)
(72) Inventeur: BOISSELLE, Patrick, 53000 Laval (FR); AZZOUZ, Kamel, 75012 Paris (FR)
(74) Mandataire: Tran, Chi-Hai
(86) Numéro de dépôt international: PCT/EP2016/064349
(87) Numéro de publication internationale: WO 2016/207184

(56) Documents cités:
- DE-A1- 10 250 034
- US-A- 4 993 481
- US-A- 6 059 016

## Description

La présente invention concerne le domaine de batteries thermiques et plus précisément les batteries thermiques comportant un matériau à changement de phase.

Les batteries thermiques sont généralement utilisées pour le chauffage de l'habitacle, notamment dans des véhicules électriques et hybrides ou alors pour le préchauffage d'un fluide caloporteur dans un circuit de gestion thermique. Les batteries thermiques peuvent également être utilisées pour le préchauffage de l'huile moteur ou de l'huile de boite de transmission automatique de véhicules à moteur à combustion interne.

US4993481 décrit un accumulateur de chaleur comprenant un conteneur, un bloc céramique avec une structure en nid d'abeille, dans lequel des trous sont agencés, dans chaque trou il est disposé un cylindre scellé aux deux extrémités, et rempli d'un matériau à changement de phase, pour le stockage de chaleur. US6059016 décrit un accumulateur de chaleur comprenant un conteneur, dans lequel est disposé un faisceau de tubes striés, scellées et parallèles, remplis d'un matériau à changement de phase; les extrémités des tubes sont en contact avec un bloc de mousse, pour compenser la contraction/expansion thermique des tubes. DE10250034 décrit un accumulateur de chaleur comprenant un faisceau de tubes pourvus d'un bouchon à chaque extrémité; une vis traverse le bouchon pour provoquer sa déformation radiale lors du serrage, bouchant ainsi l'extrémité du tube; et l'extrémité de la vis est utilisée pour fixer chaque tube sur un support perforé.

Une batterie thermique à matériau à changement de phase comporte généralement une enceinte à l'intérieur de laquelle est placé le matériau à changement de phase, généralement sous forme encapsulée, et à l'intérieur de laquelle circule un fluide. Le matériau à changement de phase est ainsi généralement encapsulé sous forme de tubes disposés sensiblement parallèlement les uns des autres afin de former un faisceau qui est inséré dans l'enceinte de la batterie thermique.

Cependant, pour ce genre de batterie thermique, il est impératif que les tubes soient scellés avant leur introduction dans l'enceinte. Il est également nécessaire de les maintenir à distance les uns des autres afin que le fluide puisse circuler entre eux. Ces caractéristiques nécessitent des étapes dédiées lors de la fabrication de la batterie thermique ce qui engendre des coûts et un allongement du temps de fabrication.

Un des buts de la présente invention est donc de remédier au moins partiellement aux inconvénients de l'art antérieur et de proposer une batterie thermique améliorée, ainsi qu'un procédé de fabrication d'une batterie thermique selon l'un des modes de réalisation présentés.

La présente invention concerne donc une batterie thermique comportant une paroi formant une enceinte comprenant en son sein des tubes contenant un matériau à changement de phase, lesdits tubes étant disposés sensiblement parallèlement les uns aux autres de sorte à former un faisceau de tubes. Selon l'invention, à au moins une extrémité du faisceau de tubes, l'ensemble des extrémités des tubes étant en prise dans un matériau d'englobage.

Le fait que les extrémités de tubes soient en prise dans un matériau d'englobage permet, lors de la fabrication de la batterie thermique de regrouper différentes étapes en une seule et ainsi de rationaliser le procédé de fabrication et donc permet des économies de temps de fabrication et une diminution des coûts.

Un autre avantage réside dans l'étanchéification des tubes contenant le matériau à changement de phase de sorte à éviter tout mélange entre le matériau à changement de phase et le fluide circulant dans l'enceinte de la batterie thermique.

Selon un aspect de l'invention, ledit matériau d'englobage fait office de bouchon des tubes.

Selon un aspect de l'invention, ledit matériau d'englobage fait office d'entretoise entre les tubes au niveau de leurs extrémités.

Selon un aspect de l'invention, ledit matériau d'englobage forme au moins une partie de la paroi formant l'enceinte de la batterie thermique.

Selon un aspect de l'invention, ledit matériau d'englobage est un matériau thermofusible.

Selon un aspect de l'invention, ledit matériau d'englobage a une température de fusion supérieure ou égale à 135° C.

Selon un aspect de l'invention, ledit matériau d'englobage est un matériau réticulable.

Selon un aspect de l'invention, le matériau réticulable est monocomposant.

Selon un aspect de l'invention, le matériau réticulable est bi-composant.

La présente invention concerne également un procédé de fabrication d'une batterie thermique comportant une paroi formant une enceinte comprenant en son sein des tubes contenant un matériau à changement de phase, ledit procédé de fabrication comportant les étapes suivantes :
- mise en place des tubes sensiblement parallèlement les uns aux autres de sorte à former un faisceau de tubes,
- trempage d'au moins une des extrémités du faisceau de tubes dans un matériau d'englobage liquide et durcissable,
- solidification du matériau d'englobage.

Selon un aspect du procédé selon l'invention, le matériau d'englobage est un matériau thermofusible.

Selon un aspect du procédé selon l'invention, le matériau d'englobage a une température de fusion supérieure ou égale à 135° C.

Selon un aspect du procédé selon l'invention, le matériau d'englobage est un matériau réticulable.

Selon un aspect du procédé selon l'invention, les extrémités des tubes sont ouvertes et que l'étape de solidification du matériau d'englobage est également une étape de bouchonnage desdits tubes.

Selon un aspect du procédé selon l'invention, ledit procédé est réalisé dans un moule de sorte qu'après l'étape de solidification du matériau d'englobage ledit matériau d'englobage forme au moins une partie de la paroi formant l'enceinte de la batterie thermique.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'une batterie thermique en coupe latérale conformément à un mode de réalisation de l'invention,
- la figure 2 montre une représentation schématique d'une partie de la batterie thermique de la figure 1.

Sur les différentes figures, les éléments identiques portent les mêmes numéros de référence.

Les modes de réalisation suivants sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

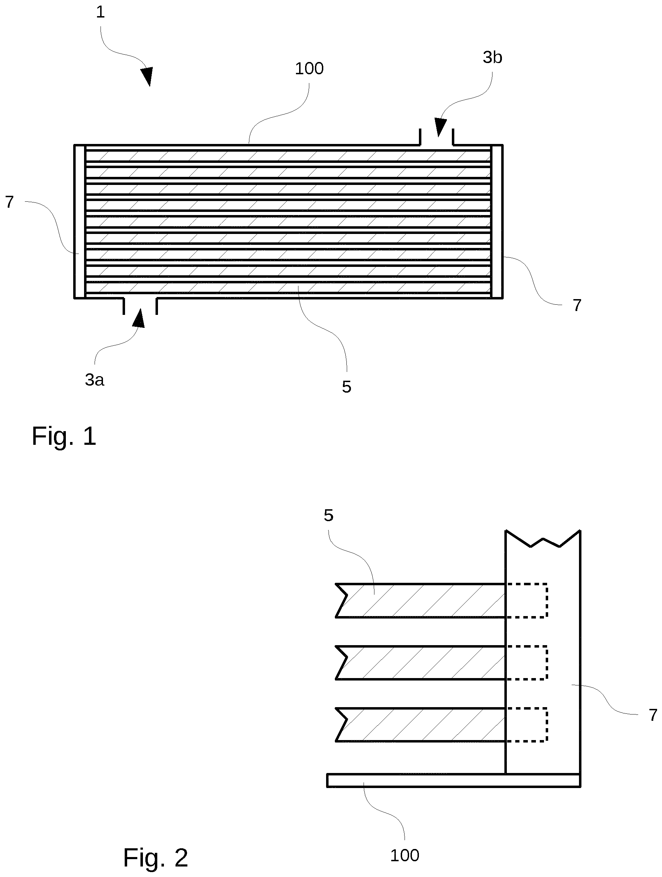

La figure 1 montre une batterie thermique 1 comportant une paroi 100 formant une enceinte dans laquelle circule un fluide entre au moins une entrée 3a et au moins une sortie 3b de fluide. La batterie thermique 1 comprend en son sein des tubes 5 contenant un matériau à changement de phase. Ces tubes 5 sont disposés sensiblement parallèlement les uns aux autres de sorte à former un faisceau de tubes 5 placé dans l'enceinte. Le fluide circule entre les tubes 5 depuis l'entrée de fluide 3a vers la sortie de fluide 3b afin de pouvoir échanger de l'énergie calorifique avec le matériau à changement de phase.

Comme le montre la figure 1 ainsi que la figure 2, qui est une représentation zoomée de la batterie thermique de la figure 1, à au moins une extrémité du faisceau de tubes 5, l'ensemble des extrémités des tubes 5 sont en prise dans un matériau d'englobage 7.

Le fait que les extrémités de tubes 5 soient en prise dans un matériau d'englobage 7 permet, lors de la fabrication de la batterie thermique 1 de regrouper différentes étapes en une seule et ainsi de rationaliser le procédé de fabrication et donc permet des économies de temps de fabrication et une diminution des coûts.

Le matériau d'englobage 7, autrement appelé matériau d'encapsulation, peut donc faire office de bouchon des tubes 5. Ainsi l'étape de bouchonnage de l'ensemble des tubes 5 afin d'emprisonner le matériau à changement de phase, peut être réalisée en une seule fois par la prise de l'extrémité du faisceau de tubes 5 dans le matériau d'englobage.

Le matériau d'englobage 7 peut également faire office d'entretoise entre les tubes 5 au niveau de leurs extrémités. Ainsi l'étape de fabrication du faisceau peut être raccourcie et moins d'entretoises peuvent être installées dans le faisceau pour maintenir les tubes 5 en place. En effet aux extrémités du faisceau de tube 5, lesdits tubes sont maintenus en place par le matériau d'englobage 7.

De plus, le matériau d'englobage 7 peut former au moins une partie de la paroi 100 formant l'enceinte de la batterie thermique 1. Cela permet notamment une fermeture rapide et aisée de l'enceinte de la batterie thermique 1 (à l'exception des entrée 3a et sortie 3b de fluide).

Comme cela est illustré aux figures 1 et 2, le matériau d'englobage 7 peut former une partie de la paroi 100 de la batterie thermique 1, notamment les parois latérales aux extrémités de ladite batterie thermique 1.

Selon un autre mode de réalisation non représenté, la paroi 100 peut entièrement être réalisée dans un même matériau que le matériau d'englobage 7. Ainsi la paroi 100 formant l'enceinte de la batterie thermique 1 ne forme qu'une seule pièce pour une meilleure solidité et une meilleure étanchéité.

Afin de venir en prise avec les extrémités des tubes 5, le matériau d'englobage 7 est de préférence déposé à l'état liquide, de gel ou de pâte au niveau desdites extrémités de tubes 5. Il est ensuite solidifié pour maintenir et/ou boucher les tubes 5 et/ou former au moins une partie de la paroi 100.

Pour cela, le matériau d'englobage 7 peut être un matériau thermofusible. Plus particulièrement, il peut être un matériau thermofusible dont la température de fusion est supérieure ou égale à 135° C. Cette température est supérieure à la température d'utilisation normale de la batterie thermique 1, ce qui empêche, lors de l'utilisation de la batterie thermique 1, que ledit matériau d'englobage 7 se liquéfie et contamine le matériau à changement de phase.

Le matériau d'englobage 7 peut également être un matériau réticulable, comme par exemple un matériau réticulable monocomposant, réticulable sous un rayonnement ultra-violet ou infrarouge. Le matériau d'englobage 7 peut être un matériau réticulable bi-composants comprenant par exemple une résine polymère et un durcisseur. L'utilisation d'un matériau réticulable permet une solidification du matériau d'englobage 7 « à froid », c'est-à-dire à une température inférieure à la température de changement de phase du matériau à changement de phase. Cela évite ainsi une contamination dudit matériau à changement de phase lors de la solidification du matériau d'englobage 7 car ledit matériau à changement de phase reste à l'état solide.

La présente invention concerne également un procédé de fabrication d'une batterie thermique 1 comportant les étapes suivantes :
- mise en place des tubes 5 sensiblement parallèlement les uns aux autres de sorte à former un faisceau de tubes 5,
- mise en contact d'au moins une des extrémités du faisceau de tubes 5 avec un matériau d'englobage 7 liquide et durcissable,
- solidification du matériau d'englobage 7.

L'étape de mise en contact d'au moins une des extrémités du faisceau de tubes 5 avec un matériau d'englobage 7 liquide et durcissable peut être réalisée par exemple par coulage dudit matériau d'englobage 7 liquide et durcissable sur l'extrémité du faisceau de tubes 5.

Afin que le matériau d'englobage 7 fasse office de bouchon des tubes 5, au début dudit procédé, les extrémités des tubes 5 sont ouvertes et l'étape de solidification du matériau d'englobage 7 est également une étape de bouchonnage desdits tubes 5 du fait de la solidification du matériau d'englobage 7.

Afin que le matériau d'englobage 7 constitue au moins une partie de la paroi 100 formant l'enceinte de la batterie thermique 1, ledit procédé de fabrication peut être réalisé dans un moule.

Ainsi, on voit bien que la batterie thermique selon l'invention, du fait que les extrémités de son faisceau de tubes 5 soient en prise dans un matériau d'englobage 7, a une production moins coûteuse et plus rapide. En effet, lors du procédé de fabrication, des étapes telles que la fermeture de l'enceinte de la batterie thermique 1, le bouchonnage des tubes 5 et la mise en place d'entretoise, peuvent être réalisées simultanément par l'application du matériau d'englobage 7 à l'état liquide au niveau des extrémités des tubes 5 et par sa solidification.

## Revendications

1. Batterie thermique (1) comportant une paroi (100) formant une enceinte comprenant en son sein des tubes (5) contenant un matériau à changement de phase, lesdits tubes (5) étant disposés sensiblement parallèlement les uns aux autres de sorte à former un faisceau de tubes (5), **caractérisée en ce qu'**à au moins une extrémité du faisceau de tubes (5), l'ensemble des extrémités des tubes (5) sont en prise dans un matériau d'englobage (7).

2. Batterie thermique (1) selon la revendication précédente, **caractérisée en ce que** ledit matériau d'englobage (7) fait office de bouchon des tubes (5).

3. Batterie thermique (1) selon l'une des revendications précédentes, **caractérisée en ce que** ledit matériau d'englobage (7) fait office d'entretoise entre les tubes (5) au niveau de leurs extrémités.

4. Batterie thermique (1) selon l'une des revendications précédentes, **caractérisée en ce que** ledit matériau d'englobage (7) forme au moins une partie de la paroi (100) formant l'enceinte de la batterie thermique (1).

5. Batterie thermique (1) selon l'une des revendications précédentes, **caractérisée en ce que** ledit matériau d'englobage (7) est un matériau thermofusible.

6. Batterie thermique (1) selon la revendication précédente, **caractérisée en ce que** ledit matériau d'englobage (7) a une température de fusion supérieure ou égale à 135° C.

7. Batterie thermique (1) selon l'une des revendications 1 à 4, **caractérisée en ce que** ledit matériau d'englobage (7) est un matériau réticulable.

8. Batterie thermique (1) selon la revendication précédente, **caractérisée en ce que** ledit matériau réticulable est monocomposant.

9. Batterie thermique (1) selon la revendication 7, **caractérisée en ce que** ledit matériau réticulable est bi-composants.

10. Procédé de fabrication d'une batterie thermique (1) comportant une paroi (100) formant une enceinte comprenant en son sein des tubes (5) contenant un matériau à changement de phase, ledit procédé de fabrication comportant les étapes suivantes :
• mise en place des tubes (5) sensiblement parallèlement les uns aux autres de sorte à former un faisceau de tubes (5),
• trempage d'au moins une des extrémités du faisceau de tubes (5) dans un matériau d'englobage (7) liquide et durcissable,
• solidification du matériau d'englobage (7).

11. Procédé de fabrication selon la revendication précédente, **caractérisé en ce que** les extrémités des tubes (5) sont ouvertes et que l'étape de solidification du matériau d'englobage (7) est également une étape de bouchonnage desdits tubes (5).

12. Procédé de fabrication selon l'une des revendications 10 ou 11, **caractérisé en ce que** ledit procédé est réalisé dans un moule de sorte qu'après l'étape de solidification du matériau d'englobage (7) ledit matériau d'englobage (7) forme au moins une partie de la paroi (100) formant l'enceinte de la batterie thermique (1).

## Patentansprüche

1. Wärmebatterie (1), die eine Wand (100) aufweist, die ein Gehäuse bildet, das darin Rohre (5) umfasst, die ein Phasenübergangsmaterial enthalten, wobei die Rohre (5) im Wesentlichen parallel zueinander angeordnet sind, um ein Bündel aus Rohren (5) zu bilden, **dadurch gekennzeichnet, dass** an mindestens einem Ende des Bündels aus Rohren (5) alle Enden der Rohre (5) in einem Kapselungsmaterial (7) gehalten werden.

2. Wärmebatterie (1) nach dem vorhergehenden Anspruch, **dadurch gekennzeichnet, dass** das Kapselungsmaterial (7) als Verschluss der Rohre (5) dient.

3. Wärmebatterie (1) nach einem der vorhergehenden Ansprüche, **dadurch gekennzeichnet, dass** das Kapselungsmaterial (7) als Abstandshalter zwischen den Rohren (5) an ihren Enden dient.

4. Wärmebatterie (1) nach einem der vorhergehenden Ansprüche, **dadurch gekennzeichnet, dass** das Kapselungsmaterial (7) mindestens einen Teil der Wand (100) bildet, die das Gehäuse der Wärmebatterie (1) bildet.

5. Wärmebatterie (1) nach einem der vorhergehenden Ansprüche, **dadurch gekennzeichnet, dass** das Kapselungsmaterial (7) ein wärmeschmelzbares Material ist.

6. Wärmebatterie (1) nach dem vorhergehenden Anspruch, **dadurch gekennzeichnet, dass** das Kapselungsmaterial (7) eine Schmelztemperatur größer oder gleich 135 °C aufweist.

7. Wärmebatterie (1) nach einem der Ansprüche 1 bis 4, **dadurch gekennzeichnet, dass** das Kapselungsmaterial (7) ein vernetzbares Material ist.

8. Wärmebatterie (1) nach dem vorhergehenden Anspruch, **dadurch gekennzeichnet, dass** das vernetzbare Material einkomponentig ist.

9. Wärmebatterie (1) nach Anspruch 7, **dadurch gekennzeichnet, dass** das vernetzbare Material zweikomponentig ist.

10. Verfahren zur Herstellung einer Wärmebatterie (1), die eine Wand (100) aufweist, die ein Gehäuse bildet, das in seinem Inneren Rohre (5) umfasst, die ein Phasenübergangsmaterial enthalten, wobei das Verfahren zur Herstellung die folgenden Schritte aufweist:
• Einsetzen der Rohre (5) im Wesentlichen parallel zueinander, um ein Bündel aus Rohren (5) zu bilden,
• Eintauchen mindestens eines der Enden des Bündels aus Rohren (5) in ein flüssiges und aushärtbares Kapselungsmaterial (7),
• Verfestigen des Kapselungsmaterials (7).

11. Verfahren zur Herstellung nach dem vorhergehenden Anspruch, **dadurch gekennzeichnet, dass** die Enden der Rohre (5) offen sind und dass der Schritt des Verfestigens des Kapselungsmaterials (7) ebenfalls ein Schritt des Verschließens der Rohre (5) ist.

12. Verfahren zur Herstellung nach einem der Ansprüche 10 oder 11, **dadurch gekennzeichnet, dass** das Verfahren in einer Form durchgeführt wird, so dass nach dem Schritt des Verfestigens des Kapselungsmaterials (7) das Kapselungsmaterial (7) mindestens einen Teil der Wand (100) bildet, die das Gehäuse der Wärmebatterie (1) bildet.

## Claims

1. Thermal battery (1) comprising a wall (100) forming an enclosure comprising within it tubes (5) containing a phase-change material, said tubes (5) being arranged substantially parallel to one another so as to form a bundle of tubes (5), **characterized in that** at least at one end of the bundle of tubes (5) all of the ends of the tubes (5) are embedded in an encasing material (7).

2. Thermal battery (1) according to the preceding claim, **characterized in that** said encasing material (7) serves to plug the tubes (5).

3. Thermal battery (1) according to one of the preceding claims, **characterized in that** said encasing material (7) serves as a spacer between the tubes (5) at their ends.

4. Thermal battery (1) according to one of the preceding claims, **characterized in that** said encasing material (7) forms at least part of the wall (100) that forms the enclosure of the thermal battery (1).

5. Thermal battery (1) according to one of the preceding claims, **characterized in that** said encasing material (7) is a hot-melt material.

6. Thermal battery (1) according to the preceding claim, **characterized in that** said encasing material (7) has a melting point greater than or equal to 135°C.

7. Thermal battery (1) according to one of Claims 1 to 4, **characterized in that** said encasing material (7) is a cross-linkable material.

8. Thermal battery (1) according to the preceding claim, **characterized in that** said cross-linkable material is a single-component material.

9. Thermal battery (1) according to Claim 7, **characterized in that** said cross-linkable material is a two-component material.

10. Method for manufacturing a thermal battery (1) comprising a wall (100) forming an enclosure comprising within it tubes (5) containing a phase-change material, said manufacturing method comprising the following steps:
• setting out the tubes (5) substantially parallel to one another so as to form a bundle of tubes (5),
• dipping at least one of the ends of the bundle of tubes (5) in a liquid and hardenable encasing material (7),
• solidification of the encasing material (7).

11. Manufacturing method according to the preceding claim, **characterized in that** the ends of the tubes (5) are open and that the step of solidification of the encasing material (7) is also a step of plugging said tubes (5).

12. Manufacturing method according to one of Claims 10 and 11, **characterized in that** said method is performed in a mold such that after the step of solidification of the encasing material (7), said encasing material (7) forms at least part of the wall (100) forming the enclosure of the thermal battery (1).
